# EUROPEAN PATENT SPECIFICATION

(11) **EP 0 825 759 B1**
(45) Date of publication and mention of the grant of the patent: **13.12.2006**
(21) Application number: 97113973.8
(22) Date of filing: 13.08.1997
(51) Int. Cl.: H04N 1/21

(54) **Data storage apparatus employing a memory having one or more data storage areas**
Einem Speicher mit ein oder zwei Datenspeicherbereichen verwendendes Datenspeichergerät
Dispositif de stockage de données utilisant une mémoire ayant une ou deux zones de stockage de données

(30) Priority: 21.08.1996 JP 23842496
(43) Date of publication of application: 25.02.1998
(73) Proprietor: CASIO COMPUTER CO., LTD., Shibuya-ku, Tokyo 151-8543 (JP)
(72) Inventor: Yamamoto, Kazuto, Casio Comp.Co.Ltd., Int. Prop.C., Hamura-shi, Tokyo, 205 (JP)
(74) Representative: Grünecker, Kinkeldey, Stockmair & Schwanhäusser Anwaltssozietät

(56) References cited:
- EP-A- 0 669 751
- EP-A- 0 669 752

## Description

The present invention relates to data storage apparatus, and more particularly to data storage apparatus employing a memory the data in which is not susceptible of being overwritten, such as flash memory.

Recently developed digital still cameras generally use non-volatile flash memory to store the pictures taken by the camera. In such digital still cameras there are usually provided a plurality of data storage areas in the flash memory, each for storing image data corresponding to a picture taken in response to the depression of a trigger switch on the camera. As is well known, however, data in flash memory cannot be directly overwritten; the memory must be initialized before new data can be written to it. Therefore, when new image data is to be stored in a data storage area already containing stored data, the camera must perform an initializing operation to delete the original data before writing the new data in the storage area. Since this typically takes a long time, on the order of a half-second, the operation time for storing image data in a data storage area already containing other data is longer than the operation time for storing image data in an initialized data storage area. Since such cameras are designed to prohibit receiving any additional input by the user during the operation time required to store image data, the user perceives the camera as inoperable during that relatively long time. Therefore, the longer the operation time for storing image data, the less the perceived value of the camera. Alternatively, the user can press a "delete" key to initialize the frame rather than writing over the data already in it. However, the user often needs to delete many frames off image data from memory after the images are printed or copied to another storage medium, such as a hard disk. Since each deletion takes on the order of one-half second, the perceived lengthy inoperability during such a delete prodecure can be highly inconvenient to the user.

Document EP 0669751A2 discloses a data processing apparatus comprising a recording medium which needs to be subjected to an information data erasing operation before the information data is recorded on the recording medium, an erasing part for erasing unnecessary information data from the recording medium, a controlling part for executing control to cause the erasing part to erase the unnecessary information data from the recording medium while the recording part is not recording the information data.

It is therefore an object of the present invention to provide data storage apparatus which minimizes or avoids the perception by the user of inoperability, or "down" time, during the period when data is being deleted from the storage apparatus. In order to achieve this and other objectives, the present invention provides a data storage apparatus as defined in the present claims.

While preferred embodiments of the invention are described with reference to a digital still camera using flash memory to store images, the invention is useful for any apparatus using flash or other non-volatile memory as described herein.
Fig. 1 is a block diagram of a digital still camera employing the present invention.
Fig. 2 is a flow chart illustrating the operation of the CPU 14 with respect to three basic operations of the electronic still camera shown in Fig. 1.
Fig. 3 is a flow chart illustrating the initializing operation by the CPU 14 in the second embodiment of the invention.
Fig. 4 is a flow chart illustrating the initializing operation by the CPU 14 in the third embodiment of the invention.
Fig. 5 is a flow chart illustrating the initializing operation by the CPU 14 in the forth embodiment of the invention.
Fig. 6 is a flow chart illustrating the initializing operation by the CPU 14 in the fifth embodiment of the invention.
Fig. 7 is a flow chart illustrating the initializing operation by the CPU 14 in the sixth embodiment of the invention.
Fig. 8 is a flow chart illustrating the initializing operation by the CPU 14 in the seventh embodiment of the invention.
Fig. 9 is a flow chart illustrating the initializing operation by the CPU 14 in the eighth embodiment of the invention.
Fig. 10 is a flow chart illustrating the initializing operation by the CPU 14 in the ninth embodiment of the invention.
Fig. 11 is a flow chart illustrating the initializing operation by the CPU 14 in the tenth embodiment of the invention.
Fig. 12 is a flow chart explaining the initializing operation by the CPU 14 in the eleventh embodiment of the present invention.
Fig. 13 is a flow chart illustrating the initializing operation by the CPU 14 in the twelfth embodiment of the invention.
Fig. 14 is a flow chart illustrating the initializing operation by the CPU 14 in the thirteenth embodiment of the invention.
Fig. 15 is a flow chart illustrating the initializing operation by the CPU 14 in the fourteenth embodiment of the invention.

Preferred embodiments of the present invention will be described as follows.

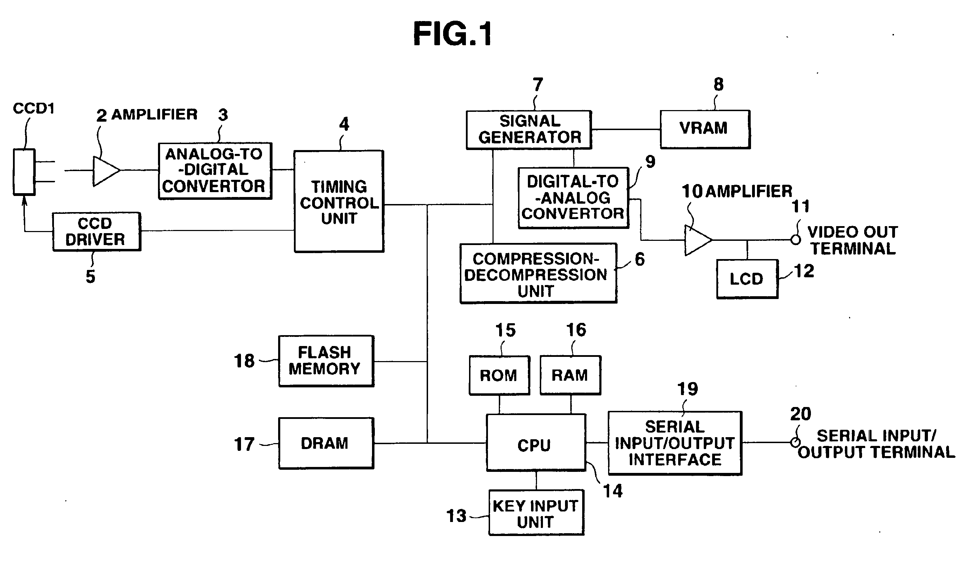

Fig. 1 shows a block diagram of a digital still camera employing the present invention. A CCD (charge coupled device) 1 generates electric image signals based on an optical image focused on its surface through a well known optical system (not shown), and supplies them to an amplifier 2. The amplifier 2 amplifies the electric image signals and supplies them to an analog-to-digital convertor 3. The analog-to-digital convertor 3 converts the electric image signals amplified by the amplifier 2 into digital image signals. A series of the digital image signals output from the analog-to-digital convertor 3 is supplied to a timing control unit 4 and is converted into parallel digital image signals by the timing control unit 4. The timing control unit 4 also supplies timing signals under the control of a CPU (central processing unit) 14 to a CCD driver 5 which drives the CCD 1.

The CPU 14 controls all the processes of the digital still camera in order to perform all of its functions in response to information entered from a key input unit 13 and a program stored in a ROM (read only memory) 15. A RAM (random access memory) 16 is used as a work area by the CPU 14.

The key input unit 13 includes a power switch for turning the camera on and off, a trigger switch for taking a picture and storing image data corresponding to the picture into a flash memory 18 which will be explained later, a mode key for selecting one of a recording mode and a reproducing mode, a reproducing key for displaying the picture corresponding to the image data stored in the flash memory 18 on a display device, such as an LCD (liquid crystal display) 12 which will be explained later, a delete key for deleting the image data stored in the flash memory 18, an image quality mode key for selecting one of a fine mode for taking a picture with high quality and a standard mode for taking a picture with standard quality, and others.

A DRAM (dynamic random access memory) 17 temporally stores the parallel digital image signals output from the timing control unit 4. The parallel digital image signals stored in the DRAM 17 are converted into digital image data which consists of luminosity data and chroma data under the control of the CPU 14.

The digital image data is supplied to a compression-decompression unit 6. The compression-decompression unit 6 compresses the parallel image data and supplies the compressed image data to the flesh memory 18. Further, the compression-decompression unit 6 decompresses the compressed image data supplied from the flash memory 18 and supplied the decompressed image data to a signal generator 7. The signal generator 7 produces digital video signals based on the digital image data supplied from the compression-depression unit 6 or the CPU 14. The digital video signals are supplied to a VRAM (video random access memory) 8 and a digital-to-analog convertor 9. The digital-to-analog convertor 9 converts the digital video signals to analog video signals. The analog video signals are supplied to a video output terminal 11 and the LCD (liquid crystal display) 12 via an amplifier 10. The LCD 12 displays a picture based on the analog image signals.

The flash memory 18 has image data storage areas for storing the compressed image data supplied from the compression-decompression unit 6 and attribute data storage areas for storing attribute data with respect to the image data storage areas. In this embodiment, the flash memory 18 has one hundred (100) image data storage areas. Three image data storage areas in the flash memory 18 are necessary to store the compressed image data corresponding to a picture taken in the fine mode. One image data storage area is necessary to store the compressed image data corresponding to a picture taken in the standard mode. The flash memory 18 also has one hundred (100) attribute data storage areas corresponding respectively to the image data storage areas. Each attribute data storage stores the attribute data with respect to each image data storage area. The attribute data indicates the status of the image data storage area. Attribute data "0" indicates an initialized status which means that the image data storage area has been initialized and is ready to be written on. Attribute data "1" indicates a delete status which means that an instruction has been entered to delete the image data in the image data storage area, by a delete key in the key input unit 13, but the instruction has not yet been carried out, i.e. the data storage area has not yet been initialized. Attribute data "2" indicates a stored status which means that the image data storage area cantains a stored image. The CPU 14 supplies the attribute data "0", "1" or "2" to the attribute data storage areas of the flash memory 18 based on the information entered from the key input unit 13. Note that in other embodiments of the invention the attribute data storage area may be in memory other than flash memory.

The compressed image data stored in the flash memory 18 is supplied to a serial input/output terminal 20 via the CPU 14 and a serial input/output interface 19 as well as the signal generator 7 via the compression-decompression unit 6 as mentioned above. The serial input/output terminal 20 may connect to a personal computer or the like.

The operation of the electronic still camera set forth above will be explained as follows.

In the recording mode selected by the mode key of the key input unit 13, the LCD 12 displays an object focused on the CCD 1. When the trigger switch of the key input unit 13 is depressed, the CPU 14 performs an operation for taking a picture. Under the control of the CPU 14, the electric image signals generated by the CCD 1 are supplied to the analog-to-digital convertor 3 via the amplifier 2 and are converted into the digital image signals by the analog-to digital convertor 3. The digital image signals are supplied to the timing control unit 4 and are converted into the parallel image signals. Thereafter, the parallel image signals are temporarily stored DRAM 17. The CPU 14 processes the parallel image signals stored in the DRAM 17 in order to producing the digital image data consisting of the luminosity data and the chroma data. The digital image data is supplied to the compression-decompression unit 6 and is compressed. The CPU 14 detects the attribute data "0" stored in the attribute data storage areas of the flash memory 18 and addresses the image data storage area corresponding to the attribute data storage area in which is stored the attribute data "0". Thereafter, the compressed image data is stored in the image data storage area(s) of the flash memory 18 which the CPU 14 addresses. In the fine mode, selected by the image quality mode key of the key input unit 13, the compressed image data is stored in three data image storage areas of the flash memory 18. On the other hand, if the standard mode is selected, the compressed image data is stored in one data image storage area of flash memory 18. The CPU 18 supplies the attribute data "2" into the attribute data storage area corresponding to the image data storage area storing the compressed image data.

In the reproducing mode, selected by the mode key, when the reproducing key of key input unit 13 is depressed, the CPU 14 performs an operation for displaying the picture corresponding to the image data stored in the flash memory 18 on the LCD 12. The CPU 14 detects the attribute data "2" stored in the attribute data storage area of the flash memory 18. The CPU 14 addresses the image data storage area corresponding to the attribute data storage area storing the data "2" in order to read out the image data from the flash memory 18. The CPU 14 performs an operation for seeking out the attribute data "2" stored in other attribute data storage area every time the reproducing key is depressed. The image data read out from the flash memory 18 is supplied to the compression-decompression unit 6 and is decompressed. The decompressed image data is supplied to the signal generator 7 and is converted into the digital video signals. The digital video signals is supplied to the VRAM 8 and the digital-to-analog convertor 9. The digital-to-analog convertor 9 converts the digital video signals into the analog video signals and supplies the analog video signals to the LCD 12 via the amplifier 10. The LCD 12 displays the picture based on the analog video signals.

When the delete key of the key input unit 13 is depressed while the LCD 12 displays the picture based on the analog video signals in reproducing mode, the CPU 14 performs an operation for deleting the image data stored in the flash memory 18 which corresponds to the displayed picture. The CPU 14 addresses the attribute data storage area of the flash memory 18 which corresponds to the image data storage area stored the image data of the displayed picture and writes the attribute data "1" in the addressed attribute data storage area.

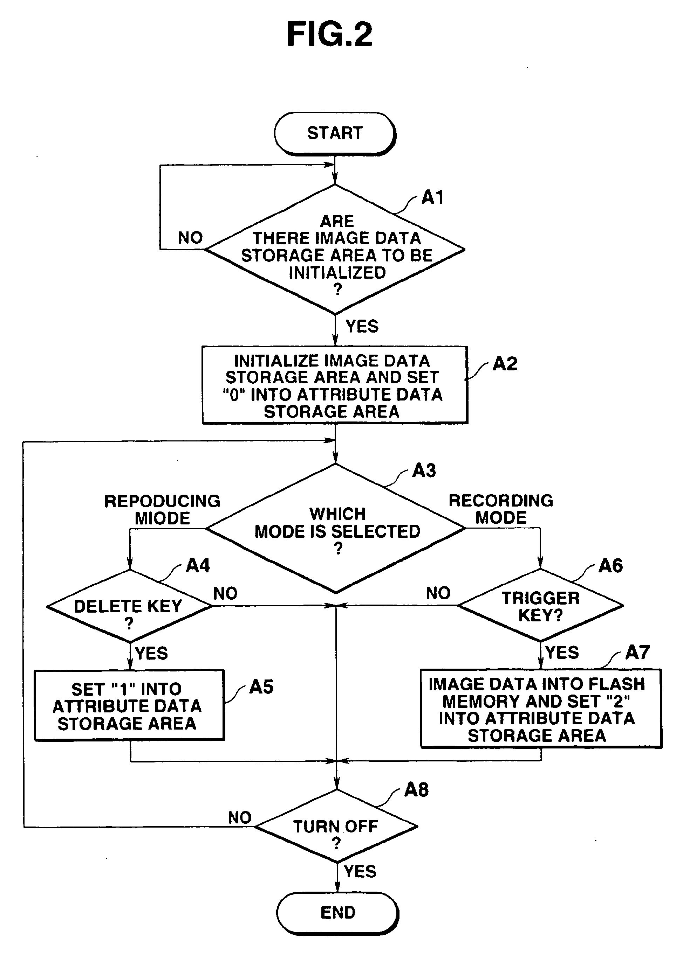

Fig.2 shows the operation of the CPU 14 with respect to three basic operations of the electronic still camera, that is, an initializing operation, a deleting operation and a recording operation.

When the electronic still camera is turned on by the power switch of the key input unit 13, the CPU 14 determines whether or not there are image data storage areas of the flash memory 18 to be initialized (step A1). That is, the CPU 14 checks for attribute data storage areas of the flash memory 18 into which the data "1" is stored. If the CPU 14 detects the data "1" in the attribute data storage area, the CPU 14 initialize the image data storage areas corresponding to those attribute data storage areas in which are stored the data "1" and replaces the attribute data "1" with the attribute data "0" in the attribute data storage area (step A2).

Thereafter, the CPU 14 checks which mode is selected by the mode key, the recording mode or the reproducing mode (step A3). As mentioned above, when the CPU 14 detects that the delete key of key input unit 13 is depressed in the reproducing mode (step A4), the CPU 14 sets the attribute data "1" into the attribute data storage area corresponding to the image data storage area which stores the image data to be deleted (step A5). The deleting operation is completed in a relatively short time because the digital image data stored in the flash memory 18 is not deleted at this time.

When the CP13 is depressed in the record mode (step A6), the CPU 14 stores the digital image data into the image data storage area(s) of the flash memory 18 and sets the data value "2" into the attribute data storage area(s) corresponding to the image data storage area(s) into which the digital image data is to be stored (step A7). The CPU 14 repeatedly performs the operations of steps A3-A7 until the camera is turned off by the power switch (step A8).

Regarding the above operations, to set data into the attribute data storage area it is necessary to initialize the attribute storage area and then write the data into it. However, each of the attribute data storage areas has such a small capacity that it does not take a lot of time to initialize and write the data into the attribute data storage area.

In this embodiment, the operating time of the recording operation is invariable because the image data is always stored in an image data storage area which has been initialized. Further, both the deleting operation and the recording operation for the flash memory 18 are able to be completed in a relatively short time because the image data storage areas are already initialized, having been initialized at the time when the camera was turned on.

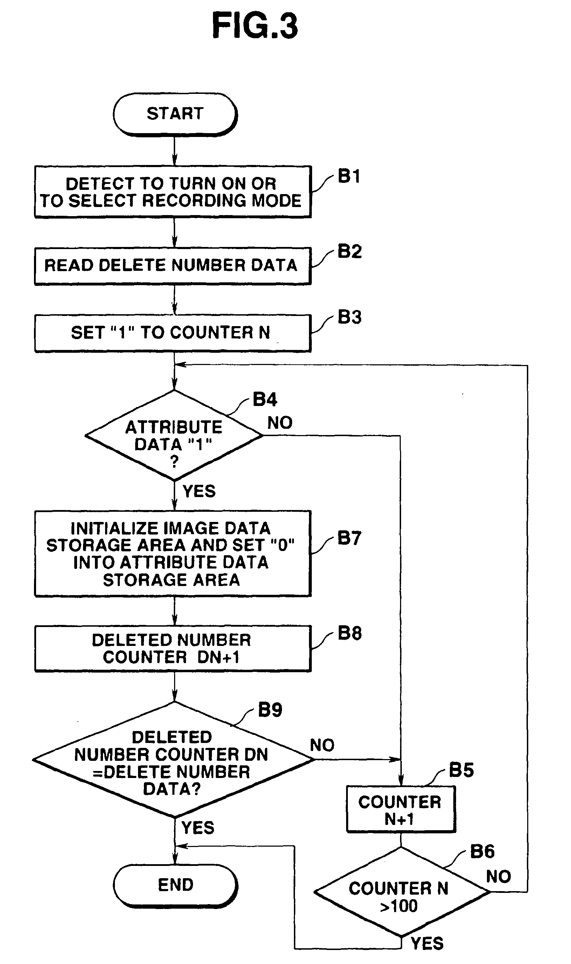

Fig 3 shows the initializing operation by the CPU 14 in a second embodiment of the present invention.

The CPU 14 starts the initializing operation when the CPU 14 detects either that the electronic still camera is turned on by the power switch or that the record mode is selected by the mode key (step B1). The CPU 14 reads delete number data from either the ROM 15 or the RAM 16. The delete number is the maximum number of image data storage areas to be deleted by the initializing operation (step B2). This prevents the wait time at turn-on from becoming too long. The delete number may be stored in ROM 15 by the manufacturer or may be stored in the RAM 16 by the user. In this embodiment, the delete number is "10". The CPU 14 sets "1" into counter N (step B3). The CPU 14 addresses the attribute data storage area and the image data storage area of the flash memory 18 based on the counter N. The CPU 14 determines whether or not each attribute data storage area, addressed based on the counter N, stores the attribute data "1" (step B4). When an attribute data storage area does not store the attribute data "1", the CPU 14 increases the counter N by "1" (step B5), and checks whether or not the counter N exceeds "100" (step B6). When the counter N exceeds "100", the CPU 14 is finished performing the initializing operation. When the counter N does not exceed "100", the CPU 14 again performs the operation of step B4. At step B4, the CPU 14 checks whether the addressed attribute data storage area contains the attribute data "1", and if it does then the CPU 14 initializes the image data storage area corresponding to the attribute data storage area storing the attribute data "1" and replaces the attribute data "1" with attribute data "0" in the attribute data storage area (step B7). The CPU 14 increases a deleted number counter DN by "1", which counter indicates the number of image data storage areas which have been initialized (step B8), and determines whether or not the deleted number counter DN is equal to the delete number data (step B9, set in this example as 10). When the deleted number counter DN is equal to the delete number data, the CPU 14 finishes performing the initializing operation. On the other hand, when the deleted number counter DN is not equal to the delete number data, the CPU 14 repeatedly performs the operations of the steps B5, B6, B4 and B7-B9 until the CPU 14 detects either that the counter n exceeds "100" (step B6) or that the deleted number counter DN is equal to the delete number data (step B9).

In this embodiment, the maximum time which would be recognized as inoperable time by a user during the initializing operation is invariable since the maximum number of image data storage areas to be deleted is fixed.

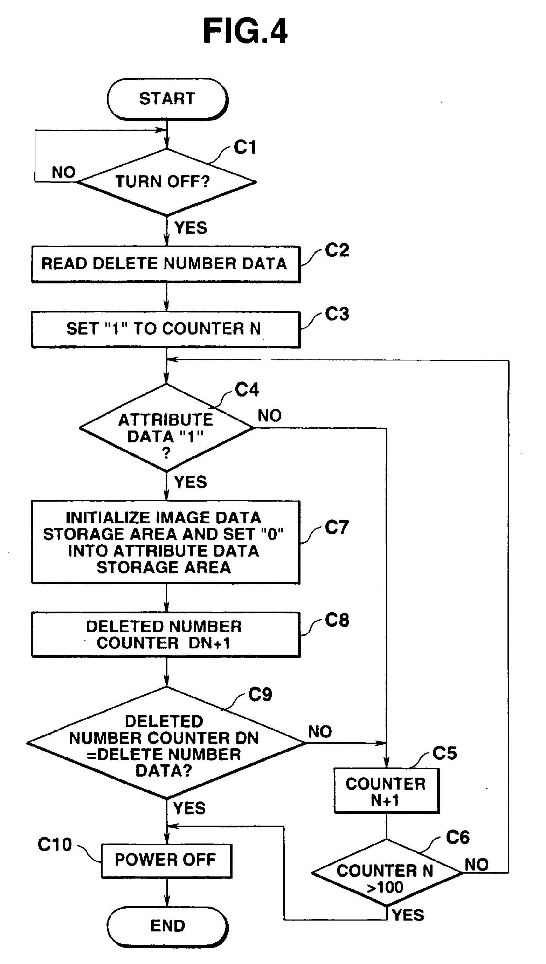

Fig. 4 shows the initializing operation by CPU 14 in the third embodiment of the present invention. The steps C2-C9 of the flow chart in Fig. 4 are the same operations as steps B2-B9 in Fig. 3. In this embodiment, the CPU 14 starts performing the initializing operation when it detects that the power switch of the key input unit 13 is operated from a power-on position to a power-off position (step C1). That is, the CPU 14 performs the operations of steps C2-C9 (which are the same as the steps B2-B9) after the power switch is turned to the off position, and delays actual turn-off of the camera (step C10) until the CPU 14 detects either that the counter n exceeds "100" (step C6) or the deleted number counter DN is equal to the delete number data (step C9).

In this embodiment, no time is perceived by the user as inoperable time since the initializing operation is performed after the user turns the camera off.

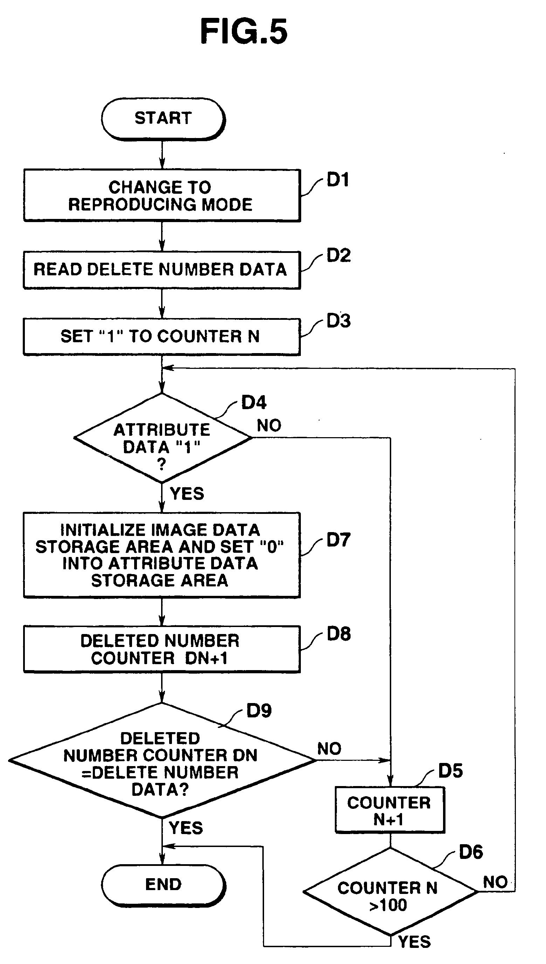

Fig. 5 shows the initializing operation by CPU 14 in a forth embodiment of the present invention. The steps D2-D9 in the flow chart of Fig. 5 are the same operations as steps B2-B9 in Fig. 3. In this embodiment, the CPU 14 starts performing the initializing operation when it detects that the reproducing mode is selected by the mode key of key input unit 13 (step D1). The CPU 14 changes from the recording mode to the reproducing mode and performs the operations of the steps D2-D9 which are the same as the steps B2-B9 in Fig.3.

In this embodiment, also, no time is perceived by the user as inoperable time.

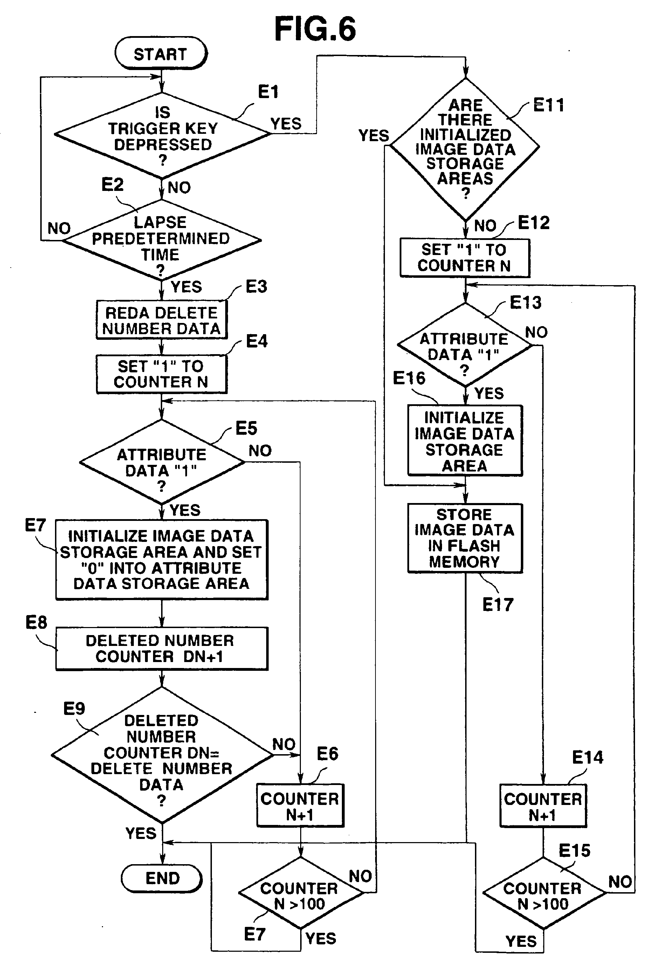

Fig. 6 shows the initializing operation by CPU 14 in a fifth embodiment of the present invention. The steps E3-E10 of the flow chart in Fig. 6 are the same operations as steps B2-B9 in Fig. 3. In this embodiment, the CPU 14 performs the initializing operations according to steps E3-E10 for a period of time when the trigger switch has not been depressed in the recording mode. That is, the CPU 14 ckecks for whether or not the trigger switch has been depressed for a predetermined time (steps E1 and E2). When it has not been depressed during that predetermined time, the CPU 14 starts performing the operations of steps E3-E10 which are the same as steps B2-B9 of Fig. 3. When the trigger switch is depressed, the CPU 14 checks for attribute data storage areas of the flash memory 18 in which the attribute data "0" is stored (step E11). When the CPU 14 finds an attribute data storage area storing the attribute data "0", the image data corresponding to the picture taken by the CCD 1 is stored in the image data storage area of the flash memory 18, which is designated by the attribute data storage area storing the attribute data "0" (step E17).

When the CPU 14 determines that no attribute data storage area stores the attribute data "0" (step E11), the CPU 14 sets "1" into counter N (step E12). Thereafter, the CPU 14 checks the attribute data stored in the attribute data storage area designated by the counter N (step E16). When the CPU 14 detects the attribute data "1" stored in an attribute data storage area, the CPU 14 initializes the image data storage area of the flash memory 18 designated by the attribute data storage area storing the attribute data "1" (step E16) and stores the image data into it (step E17). If the CPU 14 does not detect the attribute data "1" stored in the attribute data storage area designated by the counter N, the counter N is increased by "1" (step E14) and is compared with a predetermined number (100 in this case) which indicates the number of image data storage areas (step E15). The CPU 14 repeatedly performs the operations of steps E13-E15 until either the counter N exceeds "100" (step E14) or the CPU 14 detects the attribute data "1" (step E13).

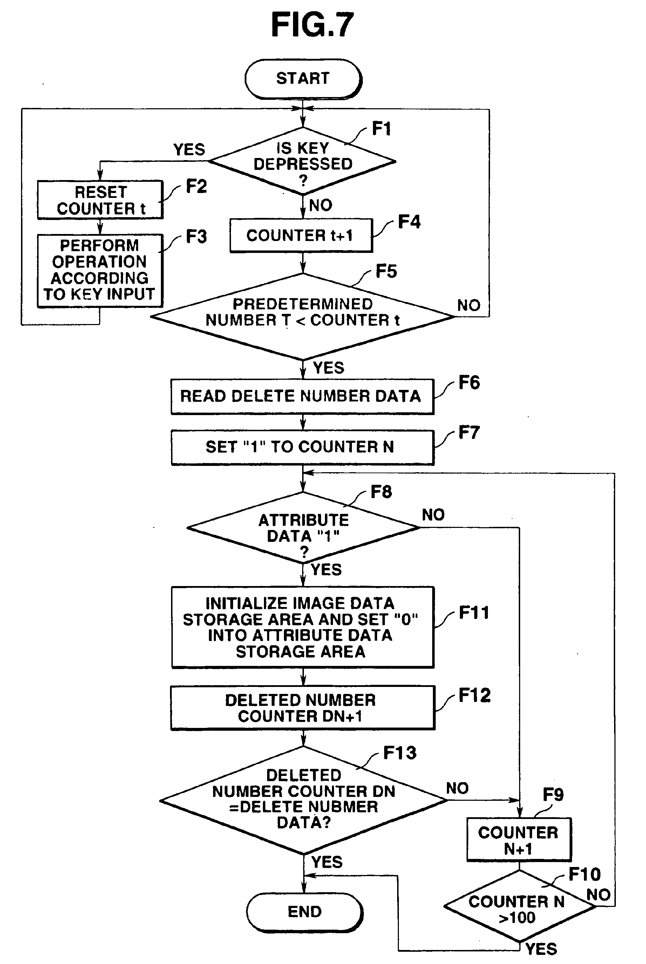

Fig. 7 shows the initializing operation by CPU 14 in a sixth embodiment of the present invention. The steps F6-F13 of the flow chart in Fig. 7 are the same operations as steps B2-B9 in Fig. 3. In this embodiment, the CPU 14 determines whether or not any keys of key input unit 13 are depressed (step F1). When one of keys of key input unit 13 is depressed, the CPU 14 resets a counter t (step F2) and performs operation indicated by the depressed key (step F3). When no keys of key input means 13 are depressed, the CPU 14 increases the counter t by "1" (step F4) and compare the counter t with a predetermined number T (step F5). When the counter t does not exceed the predetermined number T, the CPU 14 checks again for depression of the keys of key input unit 13 again (step F1). When the counter t exceeds the predetermined number T, the CPU 14 performs the operations of steps F6-F13 which are the same as those B2-B9 in Fig.3.

In the embodiments of Figs. 6 and 7, the initializing operation is able to be performed during a period of time when the electronic still camera is not in use. Further, the initializing operation is able to be performed periodically.

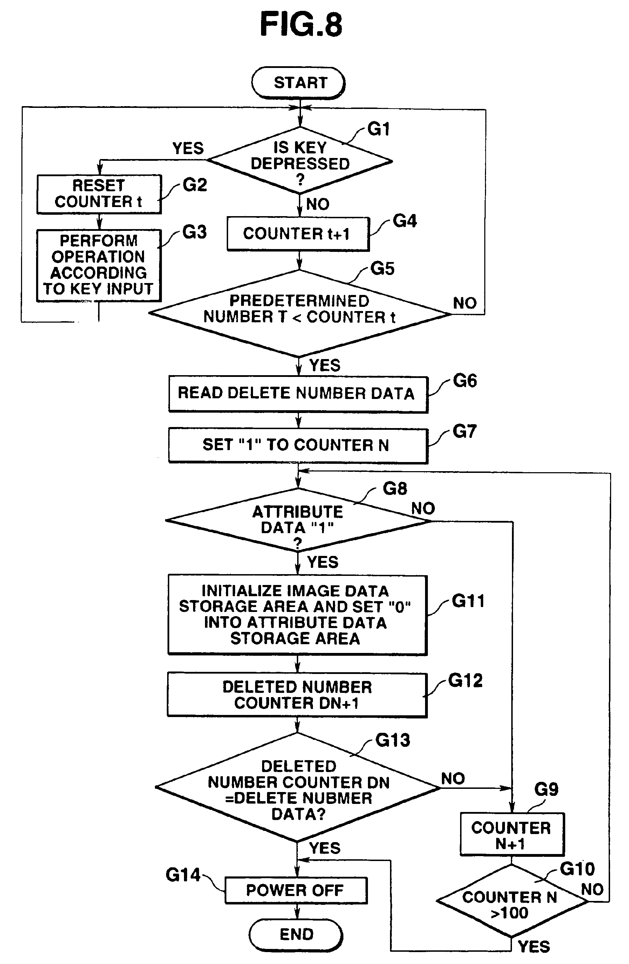

Fig. 8 shows the initializing operation by CPU 14 in a seventh embodiment of the present invention. The steps G1-G13 of the flow chart in Fig. 8 are the same operations as steps F1-F13 in Fig. 7. In this embodiment, the camera has an auto power-off function. That is, the camera is automatically turned off when no keys have been depressed for a predetermined period of time. As shown in Fig. 8, the CPU 14 detects whether or not the predetermined period of time has elapsed during which no keys have been depressed (steps G1-G3). When the predetermined period has elapsed, that is, the counter t exceeds the predetermined number T (step G5), the CPU 14 performs the operations of steps G6-G13 which are the same as steps F6-F13 in Fig. 7 and turns the camera off (step G14). According to this embodiment, no time exists which would be recognized as inoperable time by a user because of the initializing operation, since the initializing operation is performed while the user is not using the camera.

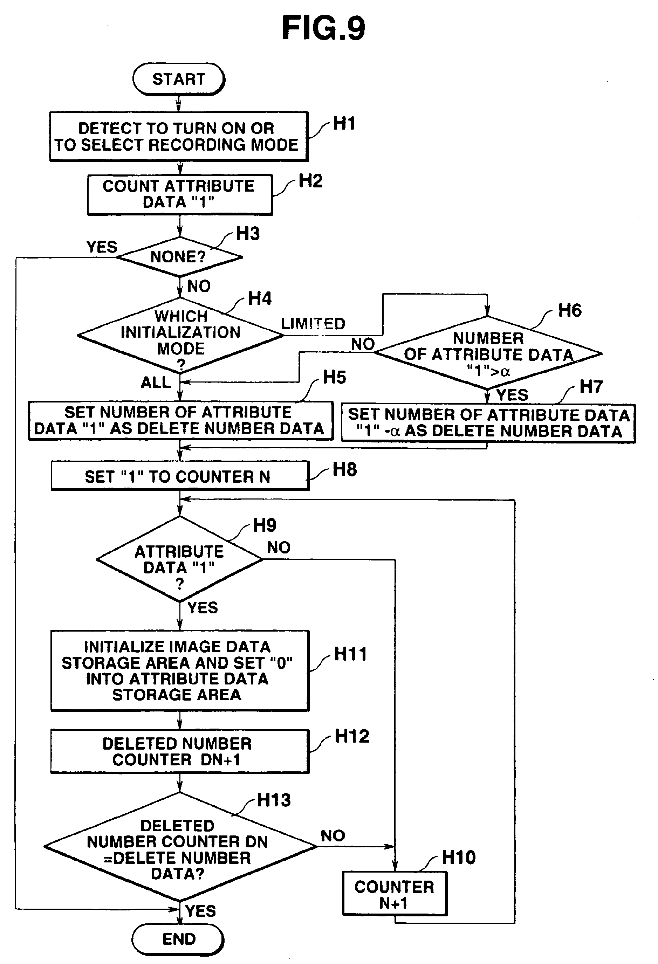

Fig. 9 shows the initializing operation by CPU 14 in an eighth embodiment of the present invention. The steps H8-H13 of the flow chart in Fig. 9 are the same operations as steps B3-B5 and B7-B9 in Fig. 3.

In this embodiment, the electronic still camera has an initialization mode key in key input unit 13 which selects one of an all initialization mode and a limited initialization mode. In the all initialization mode, all of the image data storage areas corresponding to the attribute data storage areas storing the attribute data "1" are initialized by the initializing operation. On the other hand, in the limited initialization mode, a limited number of image data storage areas corresponding to the attribute data storage areas storing the attribute data "1" are initialized by the initializing operation. The CPU 14 starts the initializing operation when it detects either that the electronic still camera is turned on by the power switch or that the recording mode is selected by the mode key (step H1). First, the CPU 14 counts the number of the attribute data storage area storing the attribute data "1" (step H2). When the counted number at the step H2 is "0", the CPU 14 does not perform the initializing operation (step H3). When the counted number at the step H2 is not "0", the CPU 14 detects that the selected initialization mode is the all initialization mode or the limited initialization mode (step H4). In the all initialization mode, the CPU 14 sets the counted number of the attribute data storage area storing the attribute data "1" as delete number data (step H5). In the limited initialization mode, the CPU 14 determines whether or not the counted number of the attribute data storage area storing the attribute data is less than a predetermined number α (step H6). When the counted number is less than the predetermined number α, the CPU 14 sets the counted number of the attribute data storage area storing the attribute data "1" as delete number data (step H5). When the counted number is not less than the predetermined number α, the CPU 14 sets a number which subtracts a predetermined number α from the counted number as delete number data (step H7). Thereafter, the CPU performs the operations of the steps H8-H13 which are the same as steps B3-B5 and B7-B9 in Fig.3.

In this embodiment, the user of the camera may select an inoperable period at time when the camera is turned on and when the recording mode is selected.

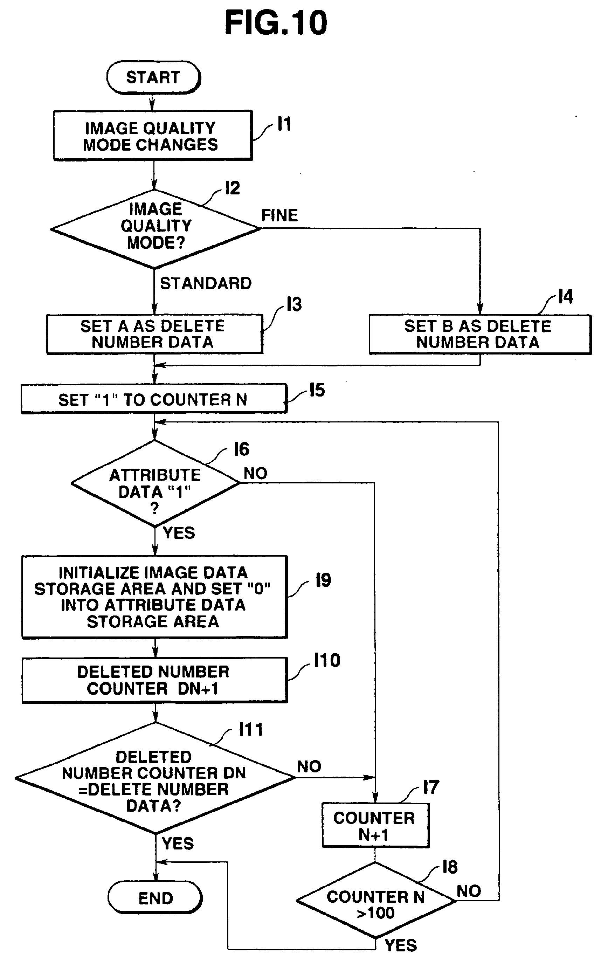

Fig. 10 shows the initializing operation by CPU 14 in a ninth embodiment of the present invention. The steps I5-I11 of the flow chart in Fig. 10 are the same operations as steps B3-B9 in Fig. 3. In this embodiment, the CPU 14 detects that the image quality mode changes between the fine mode and the standard mode (step I1). When the image quality mode changes from the fine mode to the standard mode (step I2), the CPU 14 sets first predetermined number A as the delete number data (step I3). Conversely, when the image quality mode changes from the standard mode to the fine mode (step I2), CPU 14 sets a second predetermined number B as the delete number data (step I4). In this embodiment, the first predetermined number A is less than the second predetermined number B because the image data for a picture taken in the fine mode generally needs a larger number of image data storage areas than for a picture in the standard mode. The numbers A and B may be determined by calculation as set forth later. Thereafter, the CPU 14 performs the operations of steps I5-I11 which are the same as steps B3-B9 in Fig.3.

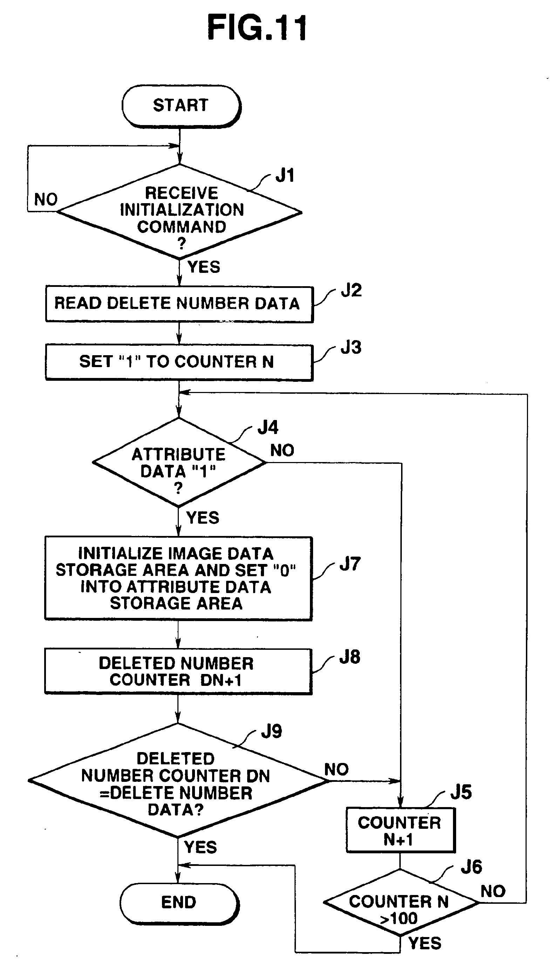

Fig. 11 shows the initializing operation by CPU 14 in a tenth embodiment of the invention. The steps J2-J9 of the flow chart in Fig. 11 are the same operations as steps B2-B9 in Fig. 3. In this embodiment, the CPU 14 detects an initialization command from a personal computer which is connected to the camera through the serial input/output terminal 20 (step J1). When the personal computer supplies the initialization command to the camera, CPU 14 performs the operations of the steps J2-J9 which are the same as steps B2-B9 in Fig. 3.

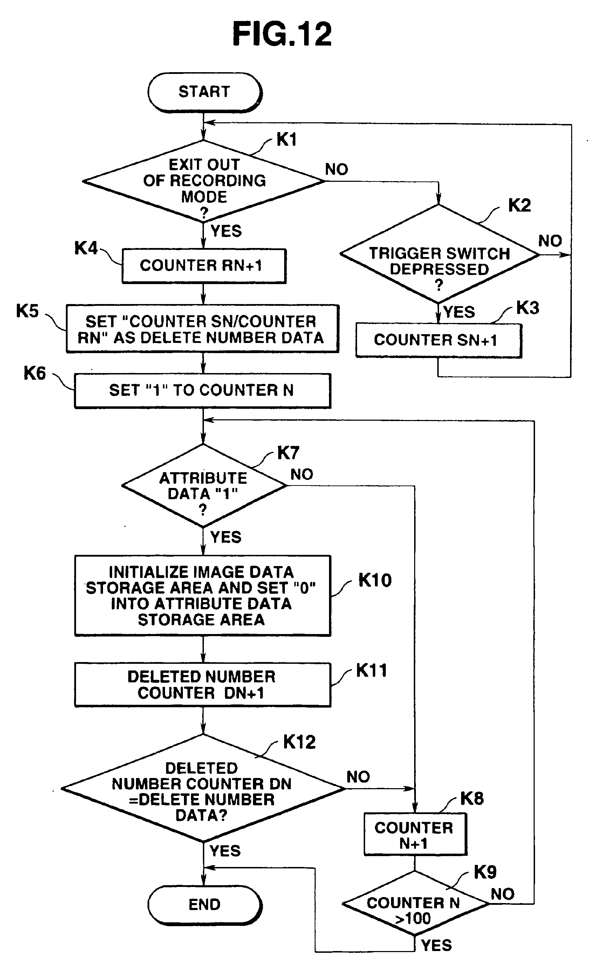

Fig. 12 shows the initializing operation by CPU 14 in an eleventh embodiment of the invention. The steps K6-K12 of the flow chart in Fig. 12 are the same operations as steps B3-B9 in Fig. 3. In this embodiment, the CPU 14 detects an average number of image data storage areas which have stored image data while the recording mode was selected. In the recording mode, the CPU 14 detects whether or not the trigger switch is depressed (steps Kl and K2). When the trigger switch is depressed, CPU 14 increases a counter SN by one in the standard mode or by three in the fine mode (step K3). When the camera exits out of recording mode, such as when it changes to the reproducing mode or turns off, the CPU 14 increases a counter RN by one (step K4) . Further, CPU 14 divides the count in counter SN by that in counter RN (step K4) and sets the quotient of the division as the delete number data (step K5). Thereafter, the CPU 14 performs the operations of steps K6-K12 which are the same as steps B2-B9 in Fig. 3. In this embodiment, the user of the camera is able to obtain the right number of initialized image data storage areas to provide a necessary initialization operation in the shortest period feasible.

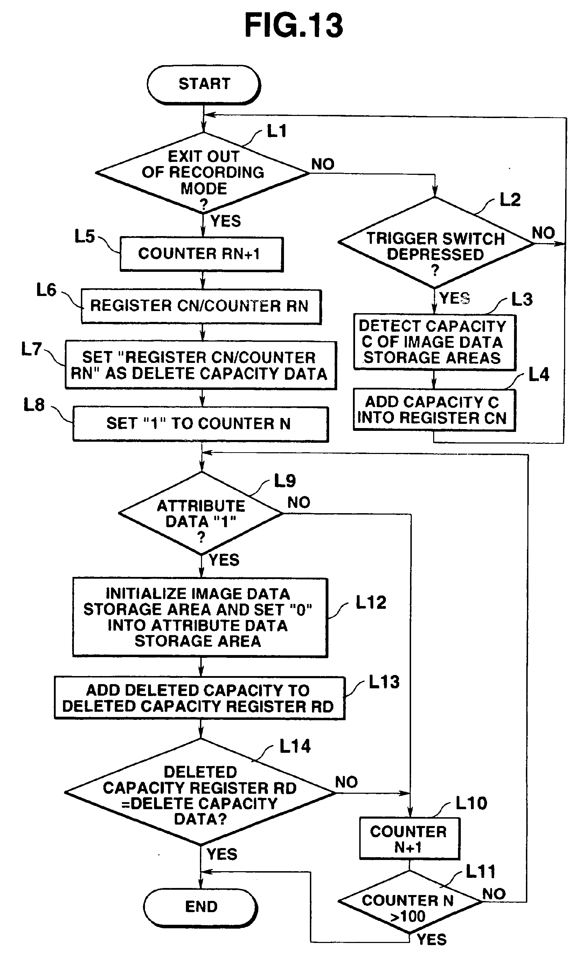

Fig. 13 shows the initializing operation by CPU 14 in a twelfth embodiment of the invention. In this embodiment, the CPU 14 detects the average capacity of the image data storage areas having stored image data therein while the recording mode was selected. In the recording mode, the CPU 14 detects whether or not the trigger switch is depressed (steps L1 and L2). When the trigger switch is depressed, the CPU 14 detects the capacity C of the image data storage area of flash memory 18 which is necessary to store the image data corresponding to the taken picture (step L3) and adds that capacity C into a register CN (step L4). When the camera exits out of recording mode, such as by changing to the reproducing mode or turning off, CPU 14 increases a counter RN by one (step L5). Further, the CPU 14 divides the number added into register CN by the count in counter RN (step L6) and sets the quotient of the division as a delete capacity data which indicates the maximum capacity of the image data storage areas to be deleted during the initializing operation (step L7). Thereafter, CPU 14 performs the operations of steps L8-L14, which are similar to steps B2-B9 in Fig. 3. In this embodiment, the CPU 14 adds the capacity of the initialized image data storage area to a deleted capacity register DC every time the image data storage area is initialized (steps L12 and L13) and compares the added capacity in deleted capacity register DC with the delete capacity data (step L14). When the compressing ratio of the compress-decompress unit 6 depends on the content of the picture that was taken, the capacity of flash memory 18 necessary to store the compressed image data is different for each image data. Therefore, this embodiment is specifically effective in electronic still cameras using such a compress-decompress unit.

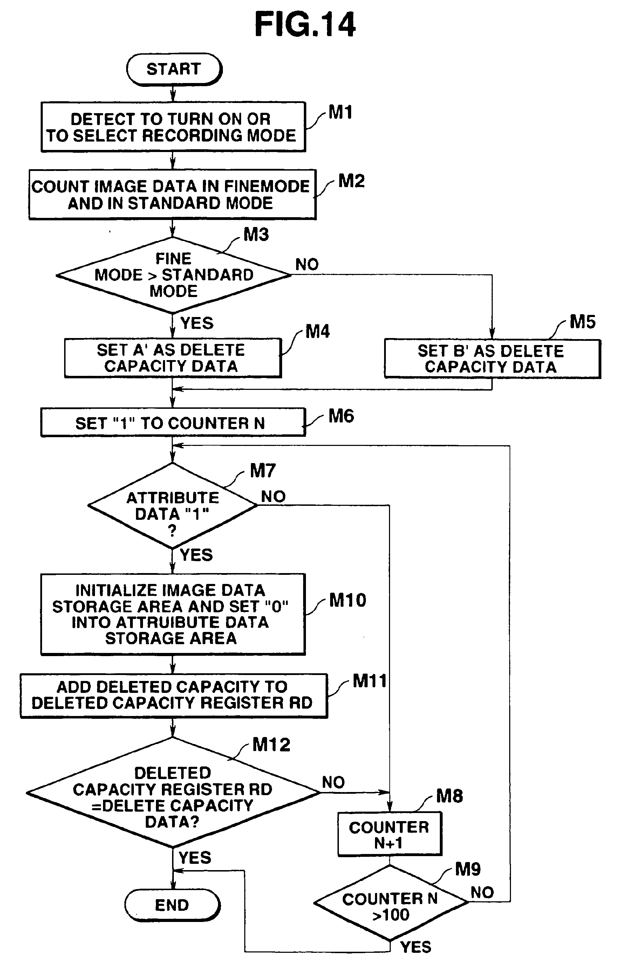

Fig. 14 shows the initializing operation by CPU 14 in a thirteenth embodiment of the invention. The steps M6-M12 of the flow chart in Fig. 14 are the same operations as steps L8-L14 in Fig. 13. In this embodiment, the attribute data storage area is also caused to store mode attribute data which indicates whether image data stored in the image data storage area is processed in the fine or the standard mode. When CPU 14 detects that the camera is turned on or that the recording mode is selected (step M1), the CPU 14 counts the number of pictures taken in the fine mode and in the standard mode respectively (step M2). When the number of pictures taken in the fine mode is larger than in the standard mode (step M3), the CPU 14 sets capacity A' as the delete capacity data (step M4). On the other hand, when the number of pictures taken in the standard mode exceeds the number taken in the fine mode (step M3), the CPU 14 sets capacity B' as the delete capacity data (step M5). Capacity A' is larger than the capacity B'. Thereafter, CPU 14 performs the operations of steps M6-M12 which are the same as steps L8-L14 in Fig. 13.

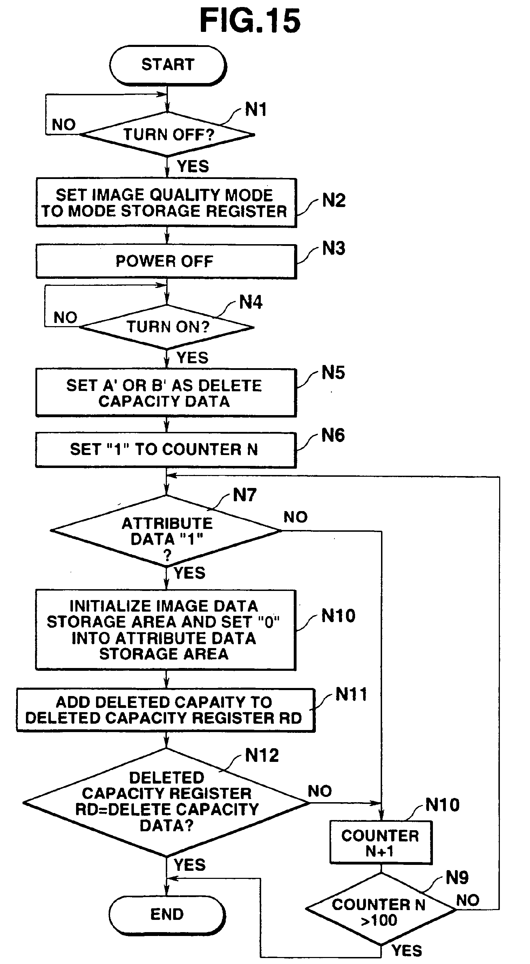

Fig. 15 shows the initializing operation by CPU 14 in a fourteenth embodiment of the invention. The steps N6-N12 of the flow chart in Fig. 15 are the same operations as in steps L8-L14 in Fig. 13. In this embodiment, the CPU 14 stores the image quality mode (fine or standard mode) selected when the camera is turned off, into a mode storage register in ROM 16 (steps N1-N3). When the camera is turned on (step N4), the CPU 14 sets the capacity A' or B' based on the image quality mode stored in the mode storage register as the delete capacity data.

Although the embodiments set forth above illustrate the invention as applied to electronic still cameras, the present invention may be used in various devices other than electronic still cameras. Although the attribute data storage areas in the above illustrative embodiments are contained in flash memory, it may also be contained in RAM or other suitable memory. Also, the present invention is not limited to flash memory as the memory means; other suitable memory technologies may be used. Features of each of the embodiments set forth above may also be combined with those of other embodiments.

## Claims

1. A data storage apparatus being adapted to write data on a memory (18) loaded in the data storage apparatus,
the memory (18) including data storage areas for storing data;
the data storage apparatus including:
a power switch to operate the apparatus from a power-ON position to a power-OFF position;
a key input unit (13) including a mode key;
writing means (14) being adapted to write data in the data storage areas of the memory (18);
actuating means (14) adapted to actuate said writing means (14) to write data in a data storage area of said memory (18);
**the data storage apparatus being further characterized by**:
delete indicating means (14) adapted to indicate the data storage areas of the memory (18) to be deleted (attribute data "1");
deleting means (14) adapted to delete said data from said data storage area of said memory (18) indicated by said delete indicating means (14), when it is detected by detecting means (14) that
(1) the power switch is operated from a power-ON position to a power-OFF position (C1); or
(2) the reproducing mode is selected (D1) by the mode key of a key input unit (13).

2. The data storage apparatus according to claim 1, wherein the key input unit has an initialization mode key which is adapted to select one of an all initialization mode and a limited initialization mode, and wherein in the limited initialization mode, a limited number of image data storage areas indicated by said delete indicating means is to be initialized.

3. The data storage apparatus according to claim 1 or 2, wherein at least two image quality modes (Fine mode and Standard mode) are to be selected for storing the data in different sizes in said memory; and wherein the number of the data stored in different image quality modes are counted respectively.

4. The data storage apparatus according to any of claims 1-3, wherein said detecting means (14) is further adapted to detect an average number of image data storage areas which have stored image data while the recording mode was selected, that is, said detecting means is adapted to detect whether or not the trigger switch is depressed; when the trigger switch is depressed, a counter SN is increased by one or more depending on the selected image quality mode; when the apparatus exits out of the recording mode, a counter RN is increased by one, the count number of the counter SN is divided by that of the counter RN and the quotient of the division is set as the delete number data.

5. The data storage apparatus according to any of claims 1-4, wherein said detecting means (14) is further adapted to turn off the power switch when the data, which is indicated by said delete indicating means, in said data storage area of said memory, has been deleted.

6. The data storage apparatus according to any of claims 1-5, further comprising connecting means (20) for connecting a peripheral apparatus; wherein said detecting means (14) is further adapted to detect a command from the peripheral apparatus through said connecting means for deleting data indicated by said delete indicating means, and said deleting means (14) is further adapted to delete data indicated by said delete indicating means when the command from the peripheral apparatus is detected by said detecting means.

7. The data storage apparatus according to any of claims 1-6, wherein said memory (18) comprises attribute data storage area for storing attribute data indicating the status of the image data storage area in said memory, and wherein the attribute data includes delete indication data with respect to said data storage area indicated by said delete indicating means.

8. The data storage apparatus according to any of claims 1-7, wherein said detecting means (14) is further adapted to detect the average capacity of image data storage areas which have stored image data while the recording mode was selected, that is, said detecting means is adapted to detect whether or not the trigger switch is depressed; when the trigger switch is depressed, said detecting means is adapted to detect the capacity C of the image data storage area of said memory which is necessary to store the image data corresponding the taken picture and add that capacity C into a register CN; when said apparatus exits out of the recording mode, the counter RN is increased by one; the number in the register CN is divided by the count number of the counter RN, and the quotient of the division is set as a delete capacity data which indicates the maximum capacity of the image data storage area to be deleted during the initialization operation.

## Patentansprüche

1. Datenspeichervorrichtung, die zum Schreiben von Daten in einen Speicher (18) eingerichtet ist, der in die Datenspeichervorrichtung eingelegt ist,
wobei der Speicher (18) Datenspeicherbereiche zum Speichern von Daten enthält;
und die Datenspeichervorrichtung enthält:
einen Stromschalter, mit dem die Vorrichtung von einer Strom-AN-Position in eine Strom-AUS-Position gebracht wird;
eine Tasteneingabeeinheit (13), die eine Modustaste enthält;
eine Schreibeinrichtung (14), die zum Schreiben von Daten in die Datenspeicherbereiche des Speichers (18) eingerichtet ist;
eine Betätigungseinrichtung (14), die zum Betätigen der Schreibeinrichtung (14) zum Schreiben von Daten in einen Datenspeicherbereich des Speichers (18) eingerichtet ist;
wobei die Datenspeichervorrichtung des Weiteren **gekennzeichnet ist durch:**
eine Löschanzeigeeinrichtung (14), die zum Anzeigen zu löschender Datenspeicherbereiche (Attributdaten "1") des Speichers (18) eingerichtet ist;
eine Löscheinrichtung (14), die zum Löschen der Daten aus den Datenspeicherbereichen des Speichers (18) eingerichtet ist, die **durch** die Löschanzeigeeinrichtung (14) angezeigt werden, wenn **durch** die Erfassungseinrichtung (14) erfasst wird, dass
1) der Stromschalter von einer Strom-AN-Position in eine Strom-AUS-Position (C1) gebracht wird; oder
2) der Wiedergabemodus **durch** die Modustaste einer Tasteneingabeeinheit (13) ausgewählt wird (D1).

2. Datenspeichervorrichtung nach Anspruch 1, wobei die Tasteneingabeeinheit eine Initialisierungsmodus-Taste aufweist, die zum Auswählen eines vollständigen Initialisierungsmodus oder eines eingeschränkten Initialisierungsmodus eingerichtet ist, und wobei in dem eingeschränkten Initialisierungsmodus eine eingeschränkte Anzahl von Bilddaten-Speicherbereichen, die durch die Löschanzeigeeinrichtung angezeigt werden, zu initialisieren sind.

3. Datenspeichervorrichtung nach Anspruch 1 oder 2, wobei wenigstens zwei Bildqualitäts-Modi (Fein-Modus und Standard-Modus) zum Speichern der Daten in verschiedenen Größen in dem Speicher auszuwählen sind, und wobei jeweils die Zahl der in verschiedenen Bildqualitäts-Modi gespeicherten Daten gezählt wird.

4. Datenspeichervorrichtung nach einem der Ansprüche 1-3, wobei die Erfassungseinrichtung (14) des Weiteren so eingerichtet ist, dass sie eine durchschnittliche Zahl von Bilddaten-Speicherbereichen erfasst, in denen Bilddaten gespeichert sind, wenn der Aufzeichnungsmodus ausgewählt wurde, d. h. die Erfassungseinrichtung so eingerichtet ist, dass sie erfasst, ob der Auslöseschalter gedrückt ist oder nicht, und wenn der Auslöseschalter gedrückt ist und ein Zähler SN in Abhängigkeit von dem ausgewählten Bildqualitäts-Modus um 1 oder mehr heraufgesetzt wird, wenn die Vorrichtung den Aufzeichnungsmodus verlässt, ein Zähler RN um 1 heraufgesetzt wird, wobei der Zählwert des Zählers SN durch den des Zählers RN dividiert wird und der Quotient der Division als die Löschzahldaten festgelegt wird.

5. Datenspeichervorrichtung nach einem der Ansprüche 1-4, wobei die Erfassungseinrichtung (14) des Weiteren so eingerichtet ist, dass sie den Stromschalter abschaltet, wenn die durch die Löschanzeigeeinrichtung angezeigten Daten in dem Datenspeicherbereich des Speichers gelöscht worden sind.

6. Datenspeichervorrichtung nach einem der Ansprüche 1-5, die des Weiteren eine Anschlusseinrichtung (20) zum Anschließen einer Peripherievorrichtung umfasst, wobei die Erfassungseinrichtung (14) des Weiteren so eingerichtet ist, dass sie einen Befehl von der Peripherievorrichtung über die Anschlusseinrichtung zum Löschen von durch die Löschanzeigeeinrichtung angezeigten Daten erfasst, und die Löscheinrichtung (14) des Weiteren so eingerichtet ist, dass sie durch die Löschanzeigeeinrichtung angezeigten Daten löscht, wenn der Befehl von der Peripherievorrichtung durch die Erfassungseinrichtung erfasst wird.

7. Datenspeichervorrichtung nach einem der Ansprüche 1-6, wobei der Speicher (18) einen Attributdaten-Speicherbereich zum Speichern von Attributdaten umfasst, die den Status des Bilddaten-Speicherbereiches in dem Speicher anzeigen, und wobei die Attributdaten Löschanzeigedaten in Bezug auf den durch die Löschanzeigeeinrichtung angezeigten Datenspeicherbereich einschließen.

8. Datenspeichervorrichtung nach einem der Ansprüche 1-7, wobei die Erfassungseinrichtung (14) des Weiteren so eingerichtet ist, dass sie die durchschnittliche Kapazität von Bilddaten-Speicherbereichen, in denen Bilddaten gespeichert sind, erfasst, wenn der Aufzeichnungsmodus ausgewählt wurde, d. h. die Erfassungseinrichtung so eingerichtet ist, dass sie erfasst, ob der Auslöseschalter gedrückt ist oder nicht, und die Erfassungseinrichtung so eingerichtet ist, dass sie die Kapazität C des Bilddaten-Speicherbereiches des Speichers erfasst, wenn der Auslöseschalter gedrückt ist, in dem die Bilddaten gespeichert werden müssen, die dem aufgenommenem Bild entsprechen, und diese Kapazität zu einem Register CN hinzufügt, wenn die Vorrichtung den Aufzeichnungsmodus verlässt, der Zähler RN um 1 heraufgesetzt wird, die Zahl in dem Register CN durch den Zählwert des Zählers RN dividiert wird und der Quotient der Division als Löschkapazitätsdaten festgelegt wird, die die während des Initialisierungsvorgangs maximal zu löschende Kapazität des Bilddaten-Speicherbereiches anzeigen.

## Revendications

1. Dispositif de mémorisation de données conçu pour écrire des données sur une mémoire (18) chargée dans le dispositif de mémorisation de données,
la mémoire (18) comprenant des zones de mémorisation de données destinées à mémoriser des données,
le dispositif de mémorisation de données comprenant :
un commutateur d'alimentation pour actionner le dispositif d'une position sous tension à une position hors tension,
une unité d'entrée à touches (13) comprenant une touche de mode,
un moyen d'écriture (14) conçu pour écrire des données dans les zones de mémorisation de données de la mémoire (18),
un moyen d'actionnement (14) conçu pour actionner ledit moyen d'écriture (14) pour écrire des données dans une zone de mémorisation de données de ladite mémoire (18),
le dispositif de mémorisation de données étant en outre **caractérisé par** :
un moyen d'indication d'effacement (14) conçu pour indiquer les zones de mémorisation de données de la mémoire (18) devant être effacées (données d'attribut "1"),
un moyen d'effacement (14) conçu pour effacer lesdites données de ladite zone de mémorisation de données de ladite mémoire (18) indiquée par ledit moyen d'indication d'effacement (14), lorsqu'il est détecté par le moyen de détection (14) que
(1) le commutateur d'alimentation est actionné d'une position sous tension à une position hors tension (C 1), ou
(2) le mode de reproduction est sélectionné (D1) par la touche de mode de l'unité d'entrée à touches (13).

2. Dispositif de mémorisation de données selon la revendication 1, dans lequel l'unité d'entrée à touches comporte une touche de mode d'initialisation qui est conçue pour sélectionner l'un d'un mode d'initialisation totale et d'un mode d'initialisation limitée, et dans lequel dans le mode d'initialisation limitée, un nombre limité de zones de mémorisation de données d'image indiquées par ledit moyen d'indication d'effacement doit être initialisé.

3. Dispositif de mémorisation de données selon la revendication 1 ou 2, dans lequel au moins deux modes de qualité d'image (mode haute résolution et mode normal) doivent être sélectionnés pour mémoriser les données dans différentes tailles dans ladite mémoire, et dans lequel le nombre des données mémorisées dans des modes de qualité d'image différents sont comptées respectivement.

4. Dispositif de mémorisation de données selon l'une quelconque des revendications 1 à 3, dans lequel ledit moyen de détection (14) est en outre conçu pour détecter un nombre moyen de zones de mémorisation de données d'image qui ont mémorisé des données d'image alors que le mode d'enregistrement a été sélectionné, c'est-à-dire que, ledit moyen de détection est conçu pour détecter si le commutateur de déclenchement est enfoncé ou non, lorsque le commutateur de déclenchement est enfoncé, un compteur SN est augmenté de un ou plus en fonction du mode de qualité d'image sélectionné, lorsque le dispositif sort du mode d'enregistrement, un compteur RN est augmenté de un, le nombre de comptages du compteur SN est divisé par celui du compteur RN et le quotient de la division est établi en tant que données de nombre d'effacement.

5. Dispositif de mémorisation de données selon l'une quelconque des revendications 1 à 4, dans lequel ledit moyen de détection (14) est en outre conçu pour ouvrir le commutateur d'alimentation lorsque les données, qui sont indiquées par ledit moyen d'indication d'effacement, dans ladite zone de mémorisation de données de ladite mémoire, ont été effacées.

6. Dispositif de mémorisation de données selon l'une quelconque des revendications 1 à 5, comprenant en outre un moyen de connexion (20) destiné à connecter un dispositif périphérique, dans lequel ledit moyen de détection (14) est en outre conçu pour détecter une instruction provenant du dispositif périphérique par l'intermédiaire dudit moyen de connexion afin d'effacer des données indiquées par ledit moyen d'indication d'effacement, et ledit moyen d'effacement (14) est en outre conçu pour effacer des données indiquées par ledit moyen d'indication d'effacement lorsque l'instruction provenant du dispositif périphérique est détectée par ledit moyen de détection.

7. Dispositif de mémorisation de données selon l'une quelconque des revendications 1 à 6, dans lequel ladite mémoire (18) comprend une zone de mémorisation de données d'attribut destinée à mémoriser des données d'attribut indiquant l'état de la zone de mémorisation de données d'image dans ladite mémoire, et dans lequel les données d'attribut comprennent des données d'indication d'effacement en ce qui concerne ladite zone de mémorisation de données indiquée par ledit moyen d'indication d'effacement.

8. Dispositif de mémorisation de données selon l'une quelconque des revendications 1 à 7, dans lequel ledit moyen de détection (14) est en outre conçu pour détecter la capacité moyenne des zones de mémorisation de données d'image qui ont mémorisé des données d'image alors que le mode d'enregistrement a été sélectionné, c'est-à-dire que, ledit moyen de détection est conçu pour détecter si le commutateur de déclenchement est enfoncé ou non, lorsque le commutateur de déclenchement est enfoncé, ledit moyen de détection est conçu pour détecter la capacité C de la zone de mémorisation de données d'image de ladite mémoire qui est nécessaire pour mémoriser les données d'image correspondant à l'image acquise et ajouter cette capacité C à un registre CN, lorsque ledit dispositif sort du mode d'enregistrement, le compteur RN est augmenté de un, le nombre dans le registre CN est divisé par le nombre de comptages du compteur RN, et le quotient de la division est établi en tant que données de capacité d'effacement qui indique la capacité maximum de la zone de mémorisation de données d'image à effacer au cours de l'opération d'initialisation.
